# EUROPÄISCHE PATENTSCHRIFT

(11) **EP 2 748 031 B1**
(45) Veröffentlichungstag und Bekanntmachung des Hinweises auf die Patenterteilung: **22.04.2015**
(21) Anmeldenummer: 13707800.2
(22) Anmeldetag: 17.01.2013
(51) Int. Cl.: B60Q 1/068

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR VÉHICULE AUTOMOBILE

(30) Priorität: 24.02.2012 AT 500422012
(43) Veröffentlichungstag der Anmeldung: 02.07.2014
(73) Patentinhaber: Zizala Lichtsysteme GmbH, 3250 Wieselburg (AT)
(72) Erfinder: RUPRECHT, Georg, A-3252 Petzenkirchen (AT); KRENN, Irmgard, A-3251 Purgstall/Erlauf (AT); HAUER, Clemens, A-3261 Steinakirchen am Forst (AT)
(74) Vertreter: Patentanwaltskanzlei Matschnig & Forsthuber OG
(86) Internationale Anmeldenummer: PCT/AT2013/050015
(87) Internationale Veröffentlichungsnummer: WO 2013/123537

(56) Entgegenhaltungen:
- EP-A1- 1 270 322
- DE-A1-102006 018 963
- FR-A1- 2 351 350
- FR-A5- 2 056 434
- JP-A- S59 195 441
- US-A1- 2009 207 626

## Beschreibung

Die Erfindung betrifft eine Beleuchtungsvorrichtung für ein Kraftfahrzeug, umfassend zwei oder mehr Lichtmodule, welche Lichtmodule zur Erzeugung einer gemeinsamen Lichtverteilung vorgesehen sind.

Weiters betrifft die Erfindung einen Fahrzeugscheinwerfer für ein Kraftfahrzeug mit zumindest einer solchen Beleuchtungsvorrichtung. Die Druckschrift US 2009/0207626 A1 offenbart eine bekannte Beleuchtungseinrichtung umfassend mehrere Lichtmodule, wobei jedes der Lichtmodule auf einem gemeinsamen Tragrahmen verstellbar angeordnet ist und einen Kühlkörper aufweist.

Um ein optimales und insbesondere gesetzeskonformes Lichtbild erzeugen zu können, ist es notwendig, dass die einzelnen Lichtmodule zueinander eingestellt werden können. Aus dem Stand der Technik sind dazu aufwändige Lösungen bekannt, welche Verstellsysteme mit komplexen Lagerungen, aufwändigen Schlittenführungen mit Kugelgelenksanbindungen für Einstellschrauben etc. zeigen.

Es ist eine Aufgabe der Erfindung, eine Beleuchtungsvorrichtung zu schaffen, welche eine einfache Einstellung der Lichtmodule zueinander erlaubt.

Diese Aufgabe wird mit einer Beleuchtungseinrichtung nach Anspruch 1 gelöst.

Erfindungsgemäß ist ein gemeinsamer Tragkörper vorgesehen, auf welchem die zumindest zwei Lichtmodule befestigt sind, wobei zumindest eines der Lichtmodule um zumindest eine Achse in Bezug auf den Tragkörper verschwenkbar an dem Tragkörper gelagert ist, und wobei das zumindest eine, verschwenkbare Lichtmodul an dem Tragkörper mittels einer Gelenkverbindung gelenkig um die zumindest eine Achse verschwenkbar gelagert ist, wobei weiters zumindest eine Vorspannvorrichtung vorgesehen ist, mittels welcher das zumindest eine verstellbare Lichtmodul unter Vorspannung an dem Tragkörper um die Gelenkverbindung verschwenkbar gehalten ist, und wobei weiters zumindest eine Einstelleinrichtung vorgesehen ist, welche vorzugsweise an dem Tragkörper gelagert ist, welche zumindest eine Einstelleinrichtung an dem zumindest einen verstellbaren Lichtmodul angreift und wobei durch ein Verstellen der zumindest einen Einstelleinrichtung das zumindest eine verstellbare Lichtmodul im Angriffspunkt der zumindest einen Einstelleinrichtung im Wesentlichen in oder entgegen der Richtung einer Vorspannkraft verschoben wird, sodass das Lichtmodul um die durch die Gelenksverbindung verlaufende, normal auf die Verbindungslinie zwischen der Gelenksverbindung und der Einstelleinrichtung stehende Verbindungslinie verschwenkt.

Über die Gelenksverbindung ist das Lichtmodul verschwenkbar gelagert, mit der Vorspannvorrichtung wird das Lichtmodul einerseits fixiert, andererseits bleibt das Lichtmodul in einem gewissen Ausmaß beweglich. Durch die zumindest eine Einstelleinrichtung kann das Lichtmodul im Angriffspunkt der Einstelleinrichtung quasi linear verschoben werden, entweder durch die Einstellvorrichtung gegen die Rückstellkraft der Vorspannvorrichtung, oder wenn die Einstellvorrichtung das Lichtmodul "freigibt", wird das Lichtmodul um diesen freigegeben Weg von der Rückstellkraft der Vorspannvorrichtung bewegt.

Mit der Erfindung wird somit eine deutlich einfachere Lösung als die eingangs aus dem Stand der Technik beschriebenen bekannten Systeme zum Verstellen von Lichtmodulen präsentiert.

Um eine optimale Einstellbarkeit des zumindest einen verstellbaren Lichtmoduls zu gewährleisten, ist vorzugsweise vorgesehen, dass das zumindest eine Lichtmodul um zwei Achsen verschwenkbar gelagert ist.

Unabhängig davon, ob eine oder vorzugsweise zwei Achsen vorgesehen sind, verlaufen diese auf jeden Fall durch die Gelenksverbindung.

Dabei ist es günstig, wenn die beiden Achsen normal aufeinander stehen.

Um eine unabhängige Einstellbarkeit zu erlauben, ist eine zweite Einstelleinrichtung vorgesehen, mittels welcher das Lichtmodul um die zweite Achse verschwenkbar ist.

Gesetzlich vorgeschrieben ist, dass Lichtbilder vertikaler und/oder in horizontaler Richtung einstellbar sind. Entsprechend ist vorgesehen, dass eine Achse in Einbaulage der Beleuchtungsvorrichtung horizontal verläuft, sodass das Lichtbild des entsprechenden Lichtmoduls in vertikaler Richtung eingestellt werden kann, und/ oder dass eine Achse in Einbaulage der Beleuchtungsvorrichtung vertikal verläuft, sodass das Lichtbild in horizontaler Richtung eingestellt werden kann.

Die Gelenksverbindung ist als Kugelgelenk ausgebildet, sodass eine freie Verschwenkbarkeit des Lichtmoduls zumindest um die beiden Verschwenkachsen möglich ist.

Bei einer konkreten Ausführungsform der Beleuchtungsvorrichtung ist die zumindest eine Einstelleinrichtung als Schraube ausgebildet, welche in dem Tragkörper drehbar gelagert ist und mit einem Anschlagbereich an einer Anschlagfläche des zugeordneten Lichtmoduls angreift.

Weiters ist vorgesehen, dass eine Einstelleinrichtung zum Verschwenken des Lichtmoduls um eine Verschwenkachse in einem definierten Normalabstand zu dieser Verschwenkachse angeordnet ist und vorzugsweise im Wesentlichen auf einer Achse normal auf die Verschwenkachse und durch die Gelenksverbindung liegt.

Dabei wird vorzugsweise darauf geachtet, dass die jeweilige Einstelleinrichtung soweit wie möglich von der Gelenksverbindung weg angeordnet ist, da dann relativ große Linearbewegung des Lichtmoduls notwendig sind, um eine geringe Verschwenkbewegung zu realisieren. Auf diese Weise lässt sich die Verschwenkbewegung sehr fein und genau einstellen. Konkret hat es sich als zweckmäßig erwiesen, wenn die beiden Einstelleinrichtungen und die Gelenksverbindung im Wesentlichen die Ecken eines Vierecks bilden und vorzugsweise in der vierten Ecke die Vorspanneinrichtung angeordnet ist.

Die Vorspanneinrichtung liegt also im Wesentlichen auf einer Diagonale des Rechteckes. Weiters besteht bei der Erfindung die Vorspannvorrichtung aus einer Schraube, welche an dem Lichtmodul drehbar gelagert ist, wobei die Schraube durch einen Bohrung in dem Tragrahmen, vorzugsweise durch eine Buchse, welche in der Bohrung in dem Tragrahmen angeordnet ist, durchgeführt ist, und wobei die Vorspannvorrichtung weiters eine Feder umfasst, welche zwischen dem Tragrahmen und einem Schraubenkopf der Schraube eingespannt ist und bei einem Anziehen der Schraube gespannt wird. Typischerweise sind mindestens zwei, vorzugsweise mehrere Lichtmodule, z.B. drei, vier, fünf oder mehr Lichtmodule an einem Tragkörper vorgesehen. Um eine optimale Einstellbarkeit der einzelnen Lichtmodule zueinander gewährleisten zu können, ist dabei vorgesehen, dass bei n Lichtmodulen, n ganzzahlig und n > 1 (also n = 2, 3, 4, 5, ....), zumindest (n - 1) Lichtmodule um zumindest eine, vorzugsweise beide Achsen verschwenkbar sind. Besonders vorteilhaft ist es dabei, wenn tatsächlich alle n Lichtmodule um die zumindest eine, vorzugsweise um beide Achsen verschwenkbar sind.

Im Folgenden ist die Erfindung an Hand der Zeichnung näher erörtert. In dieser zeigt
Fig. 1 eine erfindungsgemäße Beleuchtungsvorrichtung in einer perspektivischen Ansicht von Vorne,
Fig. 2 die Beleuchtungsvorrichtung aus Figur 1 in einer perspektivischen Ansicht von Hinten,
Fig. 3 die Beleuchtungsvorrichtung aus Figur 1 und 2 in einer explodierten Darstellung,
Fig. 4 einen Schnitt durch die Beleuchtungsvorrichtung entlang der Linie A-A aus Figur 2, und
Fig. 5 einen Schnitt durch die Beleuchtungsvorrichtung entlang der Linie B-B aus Figur 2.

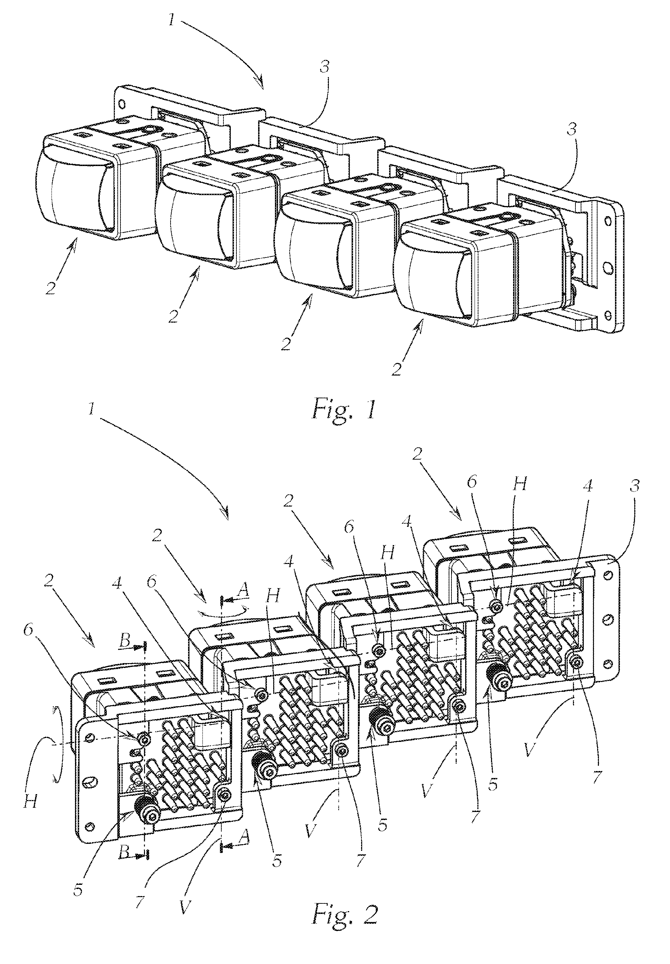

Figur 1 zeigt eine Beleuchtungsvorrichtung 1 mit vier Lichtmodulen 2, die auf einem gemeinsamen Tragkörper 3 bzw. Tragrahmen befestigt sind. Bei der gezeigten Ausführungsform sind die einzelnen Abschnitte des Tragkörpers 3 in horizontaler Richtung stufenförmig zueinander nach hinten versetzt, mit einer entsprechenden Versetzung der Lichtmodule 2. Der Tragkörper kann aber auch eine andere Gestalt aufweisen, beispielsweise kann dieser auch durchgehend eben ausgeführt sein.

Jedes der Lichtmodule 2 ist um eine horizontale Achse H verschwenkbar an dem Tragkörper 3 gelagert, sodass das Lichtbild des Lichtmoduls 2 in vertikaler Richtung eingestellt werden kann. Weiters ist jedes Lichtmodul 2 um eine vertikale Achse V an dem Tragkörper 3 gelagert, sodass das Lichtbild auch in horizontaler Richtung eingestellt werden kann. Zusammen erzeugen alle Lichtmodule 2 zusammen ein gemeinsames Lichtbild.

Beispielsweise weist ein linker Fahrzeugscheinwerfer eine Beleuchtungsvorrichtung 1 auf. Der rechte Scheinwerfer weist eine vom prinzipiellen Aufbau her vergleichbare Beleuchtungsvorrichtung auf. Zusammen erzeugen die beiden Scheinwerfer ein gewünschtes Lichtbild, beispielsweise ein Fern- oder Abblendlicht, wobei vorzugsweise die Lichtverteilung segmentweise entsprechend den einzelnen Lichtmodulen geschaltet werden kann.

Insbesondere bei Abblendlicht ist es auch denkbar, dass linker und rechter Scheinwerfer für sich eine vollständige Abblendlichtverteilung bilden. Bei Teilfernlicht kann z.B. vorgesehen sein, dass der linke Scheinwerfer den linken Teil des Lichtbildes erzeugt und der rechte Scheinwerfer den rechten Teil des Lichtbildes, zusammen ergeben die beiden Lichtbilder dann ein Vollfernlicht.

Grundsätzlich ist die Erfindung auf keine bestimmte Lichtverteilung eingeschränkt, eignet sich aber auf Grund des speziellen Aufbaus mit einzelnen Lichtmodulen, welche unabhängig voneinander betrieben werden können, besonders gut zur Erzeugung von - wie oben schon erwähnt - segmentierten Lichtverteilungen. Bei solchen Lichtverteilungen wird die Gesamtlichtverteilung aus einzelnen Lichtsegmenten, welche von den einzelnen Lichtmodulen erzeugt werde, zusammengesetzt. Durch gezieltes Ein- bzw. Ausschalten bestimmter Segmente können gewünschte Bereiche auf der Fahrbahn gezielt beleuchtet werden oder unbeleuchtet bleiben.

Insbesondere geeignet ist eine gezeigte Anordnung für die Erzeugung eines segmentierten Fernlichtes.

In jedem Fall lassen sich mit einer erfindungsgemäßen Beleuchtungsvorrichtung bzw. mit einem (oder zwei) entsprechenden Scheinwerfern Lichtverteilungen erzeugen, welche die gesetzlichen Normen, wie SAE, CCC oder ECE erfüllen.

Die beiden Verschwenkachsen H, V sind in Figur 2 für die einzelnen Lichtmodule dargestellt.

Zur Verschwenkung ist ein Lichtmodul 2 mit einer Gelenksverbindung 4 an dem Tragkörper 3 verschwenkbar gelagert, die beiden Achsen H, V verlaufen durch diese Gelenksverbindung 4 und stehen normal aufeinander.

Weiters zeigt Figur 2 eine Vorspannvorrichtung 5, mittels welcher ein Lichtmodul 2 unter Vorspannung an dem Tragkörper 3 um die Gelenksverbindung 4 verschwenkbar gehalten ist.

Zum Verschwenken selbst sind zwei Einstelleinrichtungen 6, 7 an dem Tragkörper 3 gelagert, welche an dem Lichtmodul 2 angreifen, und zwar an der dem Tragkörper 3 zugewandten Rückseite des Lichtmoduls. Mit der oberen Einstelleinrichtung 6 erfolgt ein Verschwenken des Lichtmoduls 2 um die vertikale Achse V, mit der unteren Einstellrichtung 7 erfolgt ein Verschwenken des Lichtmoduls 2 um die horizontale Achse H.

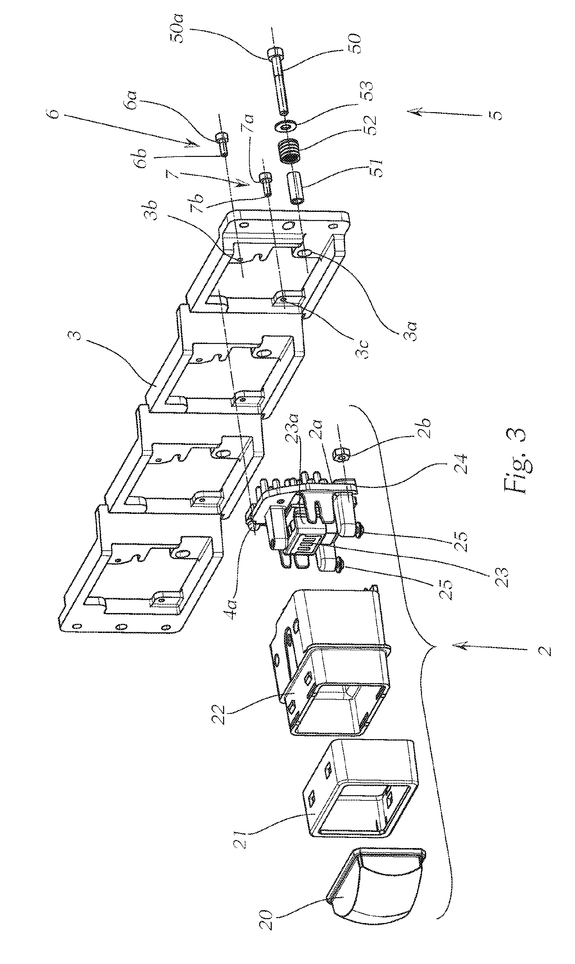

An Hand der Figuren 3 bis 5, in welchen die Zusammenhänge noch besser erkennbar sind, soll im Folgenden die Funktionsweise noch näher erörtert werden.

Vorausgeschickt sei, dass die tatsächliche Ausgestaltung der einzelnen Lichtmodule 2 für die Erfindung von nachrangiger Bedeutung ist. Bei der gezeigten Ausführungsform besteht ein Lichtmodul 2 aus einer Linse 20 (Sekundäroptik), über welche Licht aus einer nicht dargestellten Lichtquelle in einen Bereich vor der Beleuchtungsvorrichtung 1 abgebildet wird. Dazu wird das Licht der Lichtquelle in eine Primäroptik 23 eingekoppelt, aus der Primäroptik 23 tritt Licht dann aus und wird über die Linse 20 abgebildet.

An der Rückseite weist das Lichtmodul 2 einen Kühlkörper 24 auf, auf welchem die Trägerplatine für die Lichtquelle sitzt, die Primäroptik 23 ist mit dem Kühlkörper 24 (oder mit der Trägerplatine) über einen Halter 23a verbunden.

Die Linse 20 ist mittels einer Blende 21 an einem Linsenhalter 22 angebracht, dieser Linsenhalter 22 wiederum ist, beispielsweise wie dargestellt mit entsprechenden Schrauben 25, an dem Kühlkörper befestigt. Die Blende 21 dient in erster Linie zum Befestigen der Linse 20 an dem Linsenhalter 22, verhindert aber gleichzeitig durch ihre Formgebung auch die Abstrahlung des Lichts in unerwünschte Richtungen.

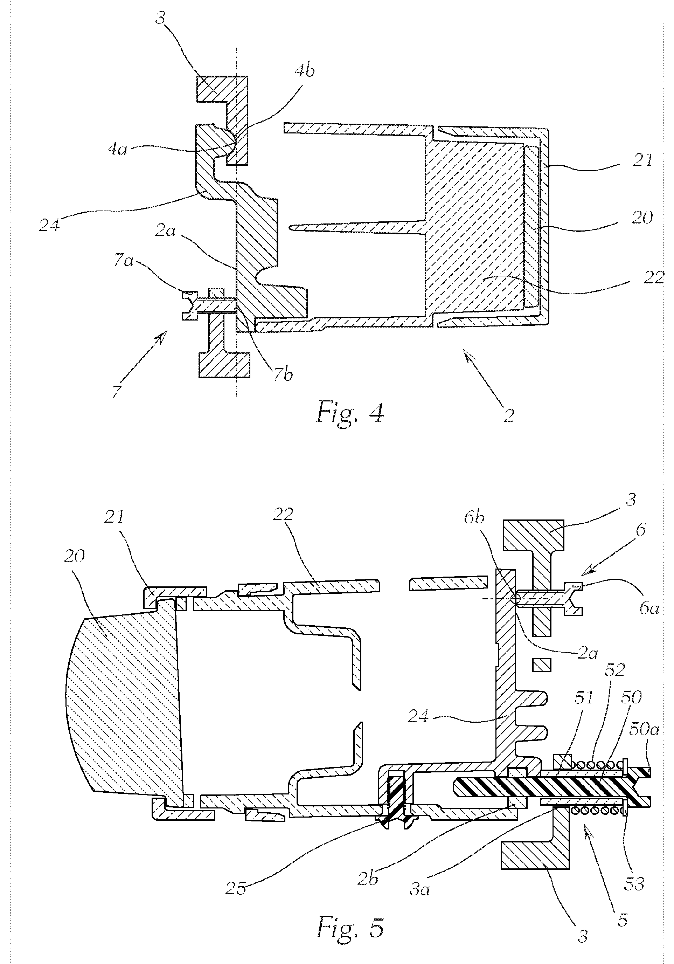

Die Gelenksverbindung 4 besteht dazu aus einer Kugel, insbesondere einer Halb- oder Teilkugel 4a, welche an dem Kühlkörper 24 angebracht ist, sowie einer korrespondierenden Vertiefung bzw. Kugelpfanne 4b an dem Tragrahmen 3 (siehe insbesondere Figur 4), in welcher die Kugel 4a drehbar gelagert ist.

Mit der Vorspannvorrichtung 5 werden Tragrahmen 3 und Lichtmodul 2 bzw. der Kühlkörper 24 zusammengehalten, d.h. die Kugel 4a in die Pfanne 4b gedrückt.

Bei der gezeigten Ausführungsform der Erfindung besteht die Vorspannvorrichtung 5, siehe insbesondere Figur 3 und 4, aus einer Schraube 50, welche an dem Lichtmodul 2, d.h. an dem Kühlkörper 24 drehbar gelagert ist. Dazu ist beispielsweise in dem Kühlkörper 24 eine Mutter 2b mit einem Innengewinde fest angebracht, in welcher die Schraube 50, welche ihrerseits über ein entsprechendes Gegengewinde verfügt, drehbar gelagert ist. Das Gewinde könnte aber auch direkt in dem Kühlkörper 24 angebracht sein, in diesem Fall kann auf die Mutter 2b verzichtet werden.

Die Schraube 50 ist durch eine Buchse 51 geführt, welche wiederum in einer Bohrung 3a in dem Tragrahmen 3 angeordnet ist.

Die Buchse 51 steht dabei mit ihrem einen Ende am Kühlkörper 24 an, mit ihrem anderen Ende an dem Schraubenkopf 50a (bzw. der Beilagescheibe 53). An Stelle der Verwendung einer Buchse 51 kann auch eine abgesetzte Schraube verwendet werden, welche dieselbe Funktion erfüllt (Vorspannen der Feder, Anschlag an den Kühlkörper 24).

Um die Buchse 51 herum ist eine Feder 52, hier in Form einer Schraubenfeder angeordnet, die zwischen dem Schraubenkopf 50a und dem Tragrahmen 3 eingespannt ist. Da üblicherweise der Schraubenkopf 50a einen geringen Durchmesser als die Feder 52 aufweist, ist zwischen dem Schraubenkopf 50a und der Feder 52 einen Beilagscheibe 53 vorgesehen. Die Schraube könnte natürlich auch über einen entsprechend vergrößerten Schraubenkopf verfügen, oder es ist ein Bund auf der Schraube vorgesehen, der beispielsweise mit dieser einstückig ausgebildet ist, an welchem die Feder eingespannt ist.

Bei einem Anziehen der Schraube 50 wird die Feder 52, bei der es sich bei dieser Ausgestaltung um eine Druckfeder handelt, zwischen Schraubenkopf 50a und Tragrahmen 3 gespannt und Kühlkörper 24 und Tragrahmen 3 werden auf diese Weise aneinander gehalten, wobei aber der Kühlkörper 24 in Bezug auf den Tragrahmen 3 bei Einwirken einer entsprechenden Kraft verschwenkbar bleibt. Durch die Vorspannung der Feder 52 kann die Federkraft in beide Richtungen wirken.

Über die Gelenksverbindung 4a, 4b ist das Lichtmodul 2 verschwenkbar gelagert, mit der Vorspannvorrichtung 5 wird das Lichtmodul 2 einerseits fixiert, andererseits bleibt das Lichtmodul 2 in geringem Ausmaß beweglich. Durch die beiden Einstelleinrichtungen 6, 7 kann das Lichtmodul 2 im Angriffspunkt der Einstellvorrichtungen 6, 7 am Kühlkörper quasi linear verschoben werden (tatsächlich ist es eine Verschwenkbewegung um die Gelenksverbindung 4), entweder durch die Einstellvorrichtung 6, 7 gegen die Rückstellkraft der Vorspannvorrichtung 5 (ausgeübt von der Feder 52), oder wenn die Einstellvorrichtung das Lichtmodul "freigibt", wird das Lichtmodul um diesen freigegebenen Weg von der Rückstellkraft der Vorspannvorrichtung bewegt.

Betrachtet man beispielsweise Figur 5 und man bewegt die Einstellvorrichtung 6 nach links, d.h. dass die Einstellvorrichtung gegen den Kühlkörper 24 drückt, dann wird der Kühlkörper 24 und entsprechend das Lichtmodul 2 um die vertikale Achse V verschwenkt. Außerdem wird die Schraube 50 in Bezug auf den feststehenden Tragkörper 3 ebenfalls nach links, also in Richtung der Bewegung des Kühlkörpers 24 bewegt. Die Buchse 51 verschiebt sich entsprechend in der Bohrung 3a in dem Tragkörper 3 ebenfalls nach links. Die Feder 52 wird noch weiter gespannt.

Würde die Einstellvorrichtung 6 nun wieder in die andere Richtung, also in Figur 5 nach rechts bewegt, so nimmt die Einstellvorrichtung 6 den Kühlkörper 24 nicht mit, da diese nicht fix miteinander verbunden sind. Allerdings kann sich nun die Feder 52 entsprechend entspannen, sodass der Kühlkörper 24 sich wieder entsprechend mit der Einstellvorrichtung 6 zurück mitbewegt.

Für die Einstellvorrichtung 7 gelten analoge Überlegungen.

Wie den Figuren 3 - 5 zu entnehmen ist, sind die beiden Einstelleinrichtungen 6, 7 vorzugsweise als Schrauben 6a, 7a ausgebildet, welche in dem Tragkörper 3 in entsprechenden Bohrungen 3b, 3c drehbar gelagert sind. Die Schrauben 7a, 7a weisen dazu ein Gewinde auf, mit welchem sie in einem entsprechenden Gegengewinde in den Bohrungen 3b, 3c gelagert sind. Bei einem Verdrehen der Schrauben 6a, 7a, bewegen sich diese dann entsprechend in axialer Richtung nach vorne (in Richtung Lichtmodul) oder nach hinten (von diesem weg).

Wesentliche Aufgabe einer Einstellvorrichtung 6, 7 ist jene, dass der Kühlkörper in eine bestimmte Position gebracht werden kann, an welcher der Kühlkörper (oder allgemein gesprochen das Lichtmodul) dann anliegt. Dazu muss eine Einstelleinrichtung also im Wesentlichen geradlinig vor- und zurück bewegbar sein und in der gewünschten Position fixierbar sein. Am einfachsten lässt sich dies, wie in den Figuren beschrieben, durch die Realisierung einer Einstellvorrichtung in Form einer Schraube umsetzen, wiewohl natürlich auch noch andere, in der Regel aber technische aufwändigere und schwieriger zu bedienende Realisierungen (z.B. verschiebbarer Bolzen mit Arretierungsmitteln) denkbar sind.

Die Schrauben 6a, 7a liegen mit einem vorzugsweise ebenen Anschlagbereich 6b, 7b (Stirnflächen 6b, 7b der Schrauben) an einer Anschlagfläche 2a des Lichtmoduls 2 an. Die Anschlagfläche 2a wird dabei von der den Schrauben zugewandten Seite des Kühlkörpers 24 gebildet.

Bei einem Verdrehen der Schraube 6a wird das Lichtmodul 2 um die vertikale Achse V horizontal verschwenkt, wobei diese Achse V von dem Kugelgelenk 4 und dem an dem Kühlkörper 24 anliegenden Anschlagbereich 7b der Schraube 7a gebildet wird.

Bei einem Verdrehen der Schraube 7a wird das Lichtmodul 2 um die horizontale Achse H vertikal verschwenkt, wobei diese Achse H von dem Kugelgelenk 4 und dem an dem Kühlkörper 24 anliegenden Anschlagbereich 6b der Schraube 6a gebildet wird.

## Patentansprüche

1. Beleuchtungsvorrichtung (1) für ein Kraftfahrzeug, umfassend zwei oder mehr Lichtmodule (2), welche Lichtmodule (2) zur Erzeugung einer gemeinsamen Lichtverteilung vorgesehen sind, sowie einen gemeinsamen Tragkörper (3), auf welchem die zumindest zwei Lichtmodule (2) befestigt sind, wobei zumindest eines der Lichtmodule (2) um zumindest eine Achse (H, V) in Bezug auf den Tragkörper (3) verschwenkbar an dem Tragkörper (3) gelagert ist, und wobei das zumindest eine, verschwenkbare Lichtmodul (2) an dem Tragkörper (3) mittels einer Gelenkverbindung (4) gelenkig um die zumindest eine Achse (V, H) verschwenkbar gelagert ist, wobei weiters zumindest eine Vorspannvorrichtung (5) vorgesehen ist, mittels welcher das zumindest eine verstellbare Lichtmodul (2) unter Vorspannung an dem Tragkörper (3) um die Gelenkverbindung (4) verschwenkbar gehalten ist, und wobei weiters zumindest eine Einstelleinrichtung (6, 7) vorgesehen ist, welche vorzugsweise an dem Tragkörper (3) gelagert ist, welche zumindest eine Einstelleinrichtung (6, 7) an dem zumindest einen verstellbaren Lichtmodul (2) angreift und wobei durch ein Verstellen der zumindest einen Einstelleinrichtung (6, 7) das zumindest eine verstellbare Lichtmodul (3) im Angriffspunkt der zumindest einen Einstelleinrichtung (6, 7) im Wesentlichen in oder entgegen der Richtung der Vorspannkraft verschoben wird, sodass das Lichtmodul (3) um die durch die Gelenksverbindung (4) verlaufende, normal auf die Verbindungslinie zwischen der Gelenksverbindung (4) und der Einstelleinrichtung (6, 7) stehende Verbindungslinie (V, H) verschwenkt, und
wobei jedes der Lichtmodule (2) einen Kühlkörper (24) aufweist,
**dadurch gekennzeichnet, dass**
die Gelenksverbindung (4) aus einer Kugel, insbesondere einer Halb- oder Teilkugel (4a), welche an dem Kühlkörper (24) angeordnet ist, und einer korrespondierenden Vertiefung bzw. Kugelpfanne (4b) an dem Tragrahmen (3), in welcher die Kugel drehbar gelagert ist, besteht,
und wobei die Vorspanneinrichtung den Tragrahmen (3) und den Kühlkörper (24) zusammenhält, indem
die Vorspannvorrichtung (5) aus einer Schraube (50) besteht, welche an dem Lichtmodul (2) drehbar gelagert ist,
wobei die Schraube (50) ein Gegengewinde aufweist, welches in ein Gewinde direkt in dem Kühlkörper (24) oder in eine Innengewinder einer Mutter (2b), welche fest in dem Kühlkörper (24) angeordnet ist, eingreift,
wobei die Schrauben (50)
durch einen Bohrung (3a) in dem Tragrahmen (3) durchgeführt ist,
wobei entweder
• die Schraube (50) durch eine Buchse (51), welche in der Bohrung (3a) in dem Tragrahmen (3) angeordnet ist, durchgeführt ist, oder
• die Schraube (50) als abgesetzte Schraube ausgebildet ist,
sodass sich die Schraube (50) an dem Kühlkörper (24) abstützt,
und wobei die Vorspannvorrichtung (5) weiters eine Feder (52) umfasst, welche zwischen dem Tragrahmen (3) und einem Schraubenkopf (50a) der Schraube (50) eingespannt ist und bei einem Anziehen der Schraube (50) gespannt wird,
sodass die Kugel (4a) in die Vertiefung bzw. Pfanne (4b) gedrückt wird.

2. Beleuchtungsvorrichtung nach Anspruch 1, **dadurch gekennzeichnet, dass** das zumindest eine Lichtmodul (2) um zwei Achsen (V, H) verschwenkbar gelagert ist.

3. Beleuchtungsvorrichtung nach Anspruch 2, **dadurch gekennzeichnet, dass** die beiden Achsen (V, H) normal aufeinander stehen.

4. Beleuchtungsvorrichtung nach Anspruch 2 oder 3, **dadurch gekennzeichnet, dass** eine zweite Einstelleinrichtung (6, 7) vorgesehen ist, mittels welcher das Lichtmodul (2) um die zweiten Achse (V, H) verschwenkbar ist, wobei vorzugsweise die beiden Einstelleinrichtungen (6, 7) und die Gelenksverbindung (4) im Wesentlichen die Ecken eines Vierecks bilden und vorzugsweise in der vierten Ecke die Vorspanneinrichtung (5) angeordnet ist.

5. Beleuchtungsvorrichtung nach einem der Ansprüche 1 bis 4, **dadurch gekennzeichnet, dass** eine Achse (H) in Einbaulage der Beleuchtungsvorrichtung (1) horizontal verläuft.

6. Beleuchtungsvorrichtung nach einem der Ansprüche 1 bis 5, **dadurch gekennzeichnet, dass** eine Achse (V) in Einbaulage der Beleuchtungsvorrichtung (1) vertikal verläuft.

7. Beleuchtungsvorrichtung nach einem der Ansprüche 1 bis 6, **dadurch gekennzeichnet, dass** die Gelenksverbindung (4) ein Kugelgelenk ist.

8. Beleuchtungsvorrichtung nach einem der Ansprüche 1 bis 7, **dadurch gekennzeichnet, dass** die zumindest eine Einstelleinrichtung (6, 7) als Schraube (6a, 7a) ausgebildet ist, welche in dem Tragkörper (3) drehbar gelagert ist und mit einem Anschlagbereich (6b, 7b) an einer Anschlagfläche (2a) des zugeordneten Lichtmoduls (2) angreift.

9. Beleuchtungsvorrichtung nach einem der Ansprüche 1 bis 8, **dadurch gekennzeichnet, dass** eine Einstelleinrichtung (6, 7) zum Verschwenken des Lichtmoduls (2) um eine Verschwenkachse (H, V) in einem definierten Normalabstand zu dieser Verschwenkachse (H, V) angeordnet ist und vorzugsweise im Wesentlichen auf einer Achse (V, H) normal auf die Verschwenkachse (H, V) und durch die Gelenksverbindung (4) liegt.

10. Beleuchtungsvorrichtung nach einem der Ansprüche 1 bis 9, **dadurch gekennzeichnet, dass** bei n Lichtmodulen (2), n ganzzahlig und n > 1, zumindest (n - 1) Lichtmodule (2) um zumindest eine, vorzugsweise beide Achsen (6, 7) verschwenkbar sind, wobei vorzugsweise alle n Lichtmodule um die zumindest eine, vorzugsweise um beide Achsen (6, 7) verschwenkbar sind.

11. Fahrzeugscheinwerfer mit zumindest einer Beleuchtungsvorrichtung nach einem der Ansprüche 1 bis 10.

## Claims

1. A lighting device (1) for a motor vehicle, comprising two or more light modules (2), which said light modules (2) are provided for generating a common light distribution, and comprising a common supporting body (3) on which the at least two light modules (2) are mounted, wherein at least one of the light modules (2) is mounted on the supporting body (3) so as to be capable of pivoting relative to the supporting body (3) about at least one axis (H, V), and wherein the at least one pivotable light module (2) is mounted on the supporting body (3) by means of a jointed connection (4) so as to be capable of pivoting in an articulated manner about the at least one axis (V, H), wherein at least one pre-tensioning device (5) is also provided, by means of which the at least one adjustable light module (2) is retained under a pretension on the supporting body (3) so as to be capable of pivoting about the jointed connection (4), and wherein at least one adjusting device (6, 7), preferably mounted on the supporting body (3), is also provided, said at least one adjusting device (6, 7) acting on the at least one adjustable light module (2), and wherein the at least one adjustable light module (3) is displaced by movement of the at least one adjusting device (6, 7) at the point of action of the at least one adjusting device (6, 7) substantially in or opposite to the direction of the pre-tensioning force, and the light module (3) therefore pivots about the connecting line (V, H) extending through the jointed connection (4), perpendicular to the connecting line between the jointed connection (4) and the adjusting device (6, 7), and
wherein each of the light modules (2) comprises a heat sink (24),
**characterized in that**
the jointed connection (4) comprises a ball, in particular a hemispherical or partial ball (4a), which is disposed on the heat sink (24), and a corresponding indentation or ball socket (4b) on the supporting frame (3), in which the ball is rotatably supported,
and wherein the pre-tensioning device holds the supporting frame (3) and the heat sink (24) together **in that**
the pre-tensioning device (5) comprises a screw (50), which is rotatably supported on the light module (2),
wherein the screw (50) has a counter-thread, which engages into a thread directly in the heat sink (24) or into an inner thread of a nut (2b), which is fixedly disposed in the heat sink (24),
wherein the screw (50)
is guided through a hole (3a) in the supporting frame (3),
wherein either
• the screw (50)
is guided through a socket (51), which is disposed in the hole (3a) in the supporting frame (3),
• the screw (50) is designed as an offset screw such that the screw (50) is supported against the heat sink (24),
and wherein the pre-tensioning device (5) also comprises a spring (52), which is tensioned between the supporting frame (3) and a screw head (50a) of the screw (50), and in which loaded when the screw (50) is tightened such that the ball (4a) is pressed into the indentation or socket (4b).

2. The lighting device according to claim 1, **characterized in that** the at least one light module (2) is mounted so as to be capable of pivoting about two axes (V, H).

3. The lighting device according to claim 2, **characterized in that** the two axes (V, H) are perpendicular relative to one another.

4. The lighting device according to claim 2 or 3, **characterized in that** a second adjusting device (6, 7) is provided, by means of which the light module (2) can pivot about the second axis (V, H), wherein, preferably, the two adjusting devices (6, 7) and the jointed connection (4) substantially form the corners of a quadrangle and the pre-tensioning device (5) is preferably disposed in the fourth corner.

5. The lighting device according to any one of claims 1 to 4, **characterized in that** an axis (H) extends horizontally when the lighting device (1) is in the installed position.

6. The lighting device according to any one of claims 1 to 5, **characterized in that** an axis (V) extends vertically when the lighting device (1) is in the installed position.

7. The lighting device according to any one of claims 1 to 6, **characterized in that** the jointed connection (4) is a ball joint.

8. The lighting device according to any one of claims 1 to 7, **characterized in that** the at least one adjusting device (6, 7) is designed as a screw (6a, 7a), which is rotatably supported in the supporting body (3) and engages with a stop region (6b, 7b) on a stop surface (2a) of the associated light module (2).

9. The lighting device according to any one of claims 1 to 8, **characterized in that** one adjusting device (6, 7) for pivoting the light module (2) about a pivot axis (H, V) is disposed with a defined perpendicular spacing away from this pivot axis (H, V) and, preferably, is substantially located on an axis (V, H) extending perpendicular to the pivot axis (H, V) and through the jointed connection (4).

10. The lighting device according to any one of claims 1 to 9, **characterized in that**, given n light modules (2), n is a whole number and n > 1, at least (n - 1) light modules (2) can pivot about at least one, preferably both axes (6, 7), wherein, preferably, all n light modules can pivot about the at least one, preferably about both axes (6, 7).

11. A vehicle headlight comprrising at least one lighting device according to any one of claims 1 to 10.

## Revendications

1. Dispositif d'éclairage (1) pour un véhicule automobile, comprenant deux modules d'éclairage (2) ou plus, lesquels modules d'éclairage (2) sont prévus pour générer une répartition de lumière commune, ainsi qu'un bâti portant (3) commun sur lequel sont fixés les au moins deux modules d'éclairage (2), dans lequel au moins l'un des modules d'éclairage (2) est monté pivotant sur le bâti portant (3) autour d'au moins un axe (H, V) par rapport au bâti portant (3), et dans lequel l'au moins un module d'éclairage (2) pivotant est monté pivotant sur le bâti portant (3) à l'aide d'une articulation (4) de manière articulée autour de l'au moins un axe (V, H), dans lequel est prévu en outre au moins un dispositif de précontrainte (5) au moyen duquel l'au moins un module d'éclairage (2) ajustable est maintenu sous précontrainte contre le bâti portant (3) de manière pivotante autour de l'articulation (4), et dans lequel est en outre prévu au moins un dispositif de réglage (6, 7), lequel est monté de préférence sur le bâti portant (3), lequel au moins un dispositif de réglage (6, 7) met en prise l'au moins un module d'éclairage (2) ajustable et dans lequel un ajustement de l'au moins un dispositif de réglage (6, 7) décale l'au moins un module d'éclairage (3) ajustable sensiblement dans la direction ou dans la direction inverse de la force de précontrainte au point d'attaque de l'au moins un dispositif de réglage (6, 7), de sorte que le module d'éclairage (3) pivote autour de la ligne de liaison (V, H) traversant l'articulation (4) et perpendiculaire à la ligne de liaison entre l'articulation (4) et le dispositif de réglage (6, 7), et
dans lequel chacun des modules d'éclairage (2) comprend un dissipateur de chaleur (24),
**caractérisé en ce que**
l'articulation (4) est composée d'une sphère, en particulier d'un hémisphère ou d'une sphère partielle (4a) agencé(e) sur le dissipateur de chaleur (24), et d'un renfoncement ou d'un logement sphérique (4b) correspondant sur le cadre portant (3), dans lequel la sphère est montée rotative,
et dans lequel le dispositif de précontrainte maintient ensemble le cadre portant (3) et le dissipateur de chaleur (24),
le dispositif de précontrainte (5) étant composé d'une vis (50) qui est montée rotative sur le module d'éclairage (2),
dans lequel la vis (50) comprend un contre-filetage qui entre en prise dans un filetage directement dans le dissipateur de chaleur (24) ou dans un filetage interne d'un écrou (2b) qui est agencé fixe dans le dissipateur de chaleur (24),
dans lequel la vis (50) est insérée à travers un alésage (3a) dans le cadre portant (3),
dans lequel soit
- la vis (50) est insérée à travers une douille (51) agencée dans l'alésage (3a) dans le cadre portant (3), soit
- la vis (50) est formée comme vis étagée, de sorte que la vis (50) s'appuie contre le dissipateur de chaleur (24),
et dans lequel le dispositif de précontrainte (5) comprend en outre un ressort (52) qui est encastré entre le cadre portant (3) et une tête de vis (50a) de la vis (50) et qui est tendu en cas de serrage de la vis (50),
de sorte que la sphère (4a) est pressée dans le renfoncement ou le logement (4b).

2. Dispositif d'éclairage selon la revendication 1, **caractérisé en ce que** l'au moins un module d'éclairage (2) est monté pivotant autour de deux axes (V, H).

3. Dispositif d'éclairage selon la revendication 2, **caractérisé en ce que** les deux axes (V, H) sont perpendiculaires l'un à l'autre.

4. Dispositif d'éclairage selon la revendication 2 ou 3, **caractérisé en ce qu'**est prévu un deuxième dispositif de réglage (6, 7), au moyen duquel le module d'éclairage (2) peut pivoter autour du second axe (V, H), dans lequel de préférence les deux dispositifs de réglage (6, 7) et l'articulation (4) forment sensiblement les angles d'un carré, et le dispositif de précontrainte (5) est agencé de préférence dans le quatrième angle.

5. Dispositif d'éclairage selon l'une des revendications 1 à 4, **caractérisé en ce qu'**un axe (H) s'étend horizontalement en position de montage du dispositif d'éclairage (1).

6. Dispositif d'éclairage selon l'une des revendications 1 à 5, **caractérisé en ce qu'**un axe (V) s'étend verticalement en position de montage du dispositif d'éclairage (1).

7. Dispositif d'éclairage selon l'une des revendications 1 à 6, **caractérisé en ce que** l'articulation (4) est une articulation sphérique.

8. Dispositif d'éclairage selon l'une des revendications 1 à 7, **caractérisé en ce que** l'au moins un dispositif de réglage (6, 7) est réalisé sous la forme d'une vis (6a, 7a) qui est montée rotative dans le bâti portant (3) et met en prise par une zone de butée (6b, 7b) une surface de butée (2a) du module d'éclairage correspondant (2).

9. Dispositif d'éclairage selon l'une des revendications 1 à 8, **caractérisé en ce qu'**un dispositif de réglage (6, 7) destiné à faire pivoter le module d'éclairage (2) autour d'un axe de pivotement (H, V) est agencé à une distance normale définie par rapport à cet axe de pivotement (H, V) et se trouve de préférence sensiblement sur un axe (V, H) perpendiculaire à l'axe de pivotement (H, V) et traversant l'articulation (4).

10. Dispositif d'éclairage selon l'une des revendications 1 à 9, **caractérisé en ce que**, pour n modules d'éclairage (2), n étant un entier et n > 1, au moins (n - 1) modules d'éclairage (2) peuvent pivoter autour d'au moins un axe, de préférence autour des deux axes (6, 7), dans lequel de préférence la totalité des n modules d'éclairage peuvent pivoter autour de l'au moins un axe, de préférence autour des deux axes (6, 7).

11. Projecteur de véhicule avec au moins un dispositif d'éclairage selon l'une des revendications 1 à 10.
